# EUROPEAN PATENT SPECIFICATION

(11) **EP 3 300 310 B1**
(45) Date of publication and mention of the grant of the patent: **19.06.2019**
(21) Application number: 16190671.4
(22) Date of filing: 26.09.2016
(51) Int. Cl.: H04L 12/44, H04B 3/00, H04L 12/40

(54) **CONTROLLER AREA NETWORK (CAN) SYSTEM**
SYSTEM AUS CONTROLLER-AREA-NETWORKS, CANS
SYSTÈME DE RÉSEAU DE MULTIPLEXAGE CAN

(43) Date of publication of application: 28.03.2018
(73) Proprietor: Aptiv Technologies Limited, St. Michael (BB)
(72) Inventor: VOIGT, Wolfgang, 44867 Bochum (DE); PARRAS, Karl-Heinz, 90459 Nuernberg (DE)
(74) Representative: Robert, Vincent

(56) References cited:
- WO-A1-88/00779
- DE-B- 1 295 662

## Description

### TECHNICAL FIELD

The invention relates to bus systems for transmitting data to and from a plurality of remote units via a bus line. It has particular application in (CAN) Controller Area Network systems. A CAN bus is a vehicle bus standard, designed to allow microcontrollers and devices to communicate with each other in applications without a host computer,

### BACKGROUND OF THE INVENTION

For nearly twenty years CAN has been the dominating bus system within the automotive industry. With ever growing demand concerning data throughput fast CAN and CAN FD (flexible data) rate systems, these systems will be implemented more and more in future modern car communication. The physical back bone of the original CAN system is defined by ISO11898: a linear transmission line build by a twisted pair cable with a characteristic wave impedance of 120 Ω and a proper termination at both ends. The connection to the different CAN devices along the line is accomplished by short stub lines which have a negligible influence on the wave impedance of the system.

However this linear topology is not optimal for the typical car cable harness, and attempts have been made to create a reliable star- or double star topology with one distribution point within the motor compartment and the second one in the passenger cabin for instance. To avoid heavy signal distortion by ringing and reflected signals on the line and to achieve independency from the length of the cable branches, the characteristic wave impedance must be respected or at least approximated in all sections of the CAN lines.

Patent Application DE 4235616A1 proposes a solution for this problem at least for lower transmission rates. Approximation of the wave impedance is accomplished by implementing proper ferrite beads with frequency dependent attenuation at the junction points. This solution will function quite fine with low and medium range data rates. With transmission speeds up to 5 Mbit/s the distortions and signal attenuations will become insurmountable. These high data speeds with clock rates of 200 ns need a more sophisticated adaptation of the characteristic wave impedance and enhancement of the signal amplitude. DE-B-12 95 662 proposes the use of a negative impedance at the centre of a star-shaped network for reducing attenuation.

WO-A1-88/00779 proposes a solution for reducing noise in a star-shaped network by connecting or disconnecting bias voltage means to respective differential amplifiers.

It is an object of the invention to overcome these problems. It is in a particular object to overcome the problems of signal distortion due to reflections and ringing at high data rates and inacceptable signal attenuation.

### SUMMARY OF THE INVENTION

The invention specifies a Controller Area Network arrangement, CAN arrangement, according to claim 1. Said claim - inter alia - specifies switch means.

Said switch means may be adapted to provide a bypass path for signals when said CAN is active or in transmitting mode. Said switches may comprise Schottky diodes or a pair of transistors located in parallel and each connected to each line of said pair of communication lines. Said transistors may be bipolar transistors or MOSFETs. Where said transistors are bipolar transistors, the collector and emitter terminals of the first transistor may be connected to either side of the first balancing resistor located on the first of said pair of communication line and the collector and emitter terminals of second transistor may be connected to either side of the balancing resistor located on the second of said pair of communication lines. Wherein said transistors are MOSFETs, the source and drain terminals of the first MOSFET may be connected to either side of a first balancing resistor and the source and drain of said second MOSFET may be connected to either side of a second balancing resistor.

Further preferred embodiments of the invention comprise a single star CAN configuration according to claim 8 and a CAN system according to claim 9.

### BRIEF DESCRIPTION OF THE DRAWINGS

The Invention will now be described by way of example and with reference to the following figures of which:
Figure 1 shows a schematic figure showing a CAN system;
Figure 2 a to 2 d shows designs of real symmetrical splitters in relation to CAN systems and configurations;
Figure 3 shows a typical "double star" topology CAN system;
Figure 4 shows one example of a CAN arrangement according to the current invention; and
Figure 5a to c shows particular embodiments of the invention.

### DESCRIPTION OF THE PREFERRED EMBODIMENTS

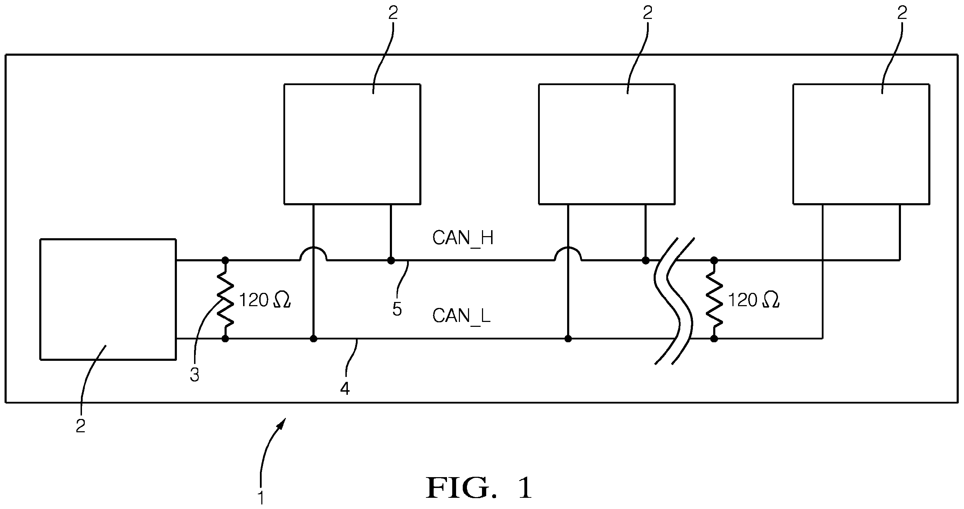

Figure 1 shows a schematic figure showing a CAN system 1 comprising one or more CAN devices 2 connected by a bus line comprising a pair of twisted lines (4,5) designated CAN Hi (CAN_H), with reference numeral 5, and CAN Lo (CAN_L), designated by reference numeral 4, in the figure. A resistance 3 is added to the end of each line to ensure correct and balancing impedances. In a standard, this is 120Ω. According to transmission line theory signal disturbing reflections will be generated at the end of the transmission line if the terminating (load-) impedance is not identical with the corresponding characteristic wave impedance. As a CAN data stream, especially with high data rate, consists of a broadband frequency spectrum, the signal group delay of the whole system should be frequency independent to avoid signal distortion by different transit times for different frequencies.

As the line properties are given (120 Ω symmetrical twisted pair cable with known capacity, resistance and inductance per meter) the terminating impedances must be real and identical with the characteristic wave impedance of the line. It is preferable in said systems to provide a system with symmetrical, resistive n-port line splitter with correct characteristic wave impedance on all port.

If it is assumed that a line splitter (synonym: power splitter) is realised distributing an incoming signal to a number of outgoing lines, and has to be totally frequency independent concerning the signal bandwidth, it should be realized by resistors only in the first step.

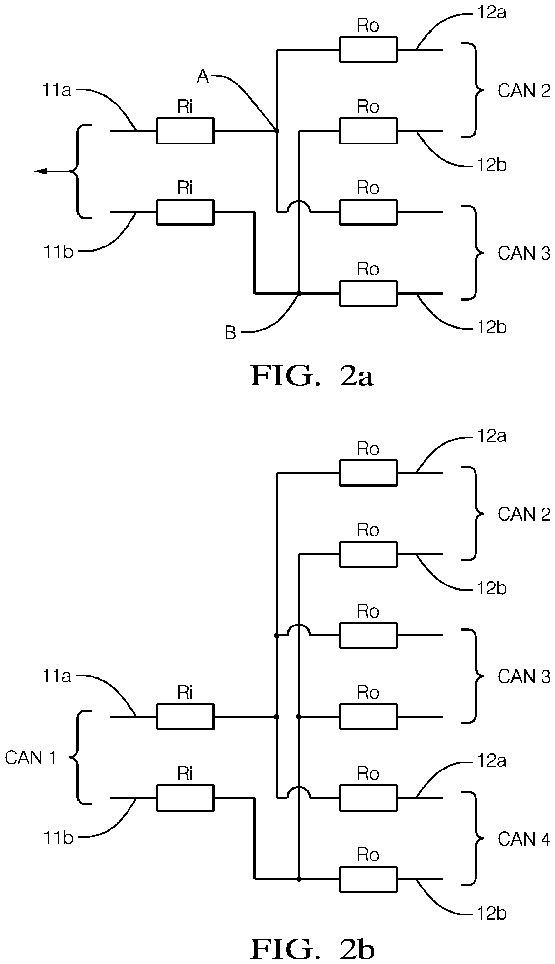

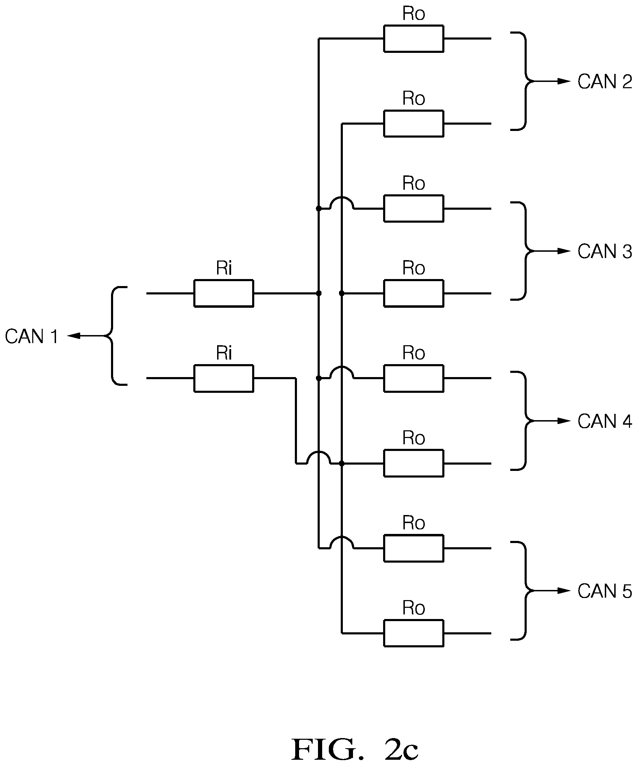

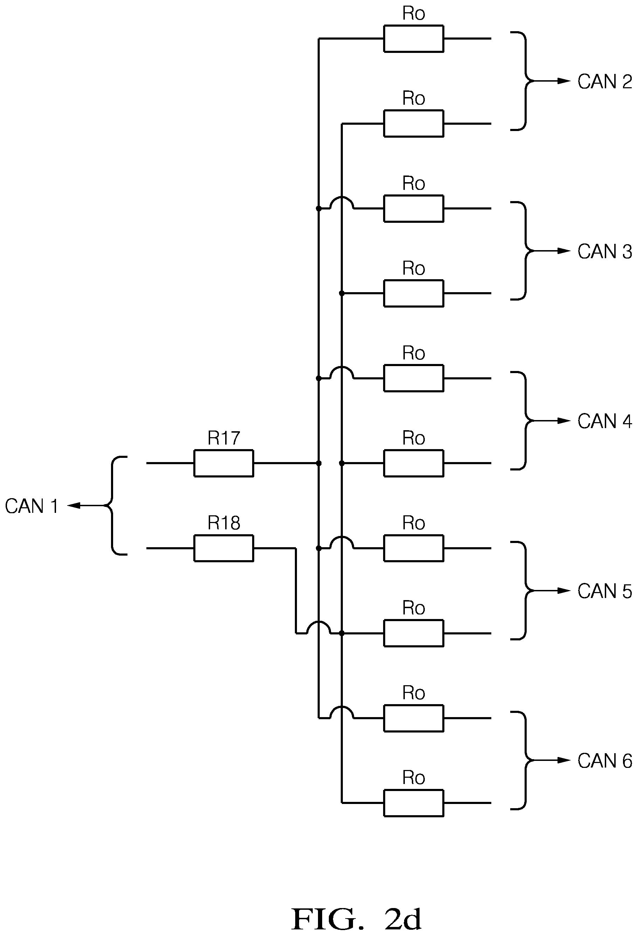

Figure 2 a to 2 d shows designs of real symmetrical splitters in relation to CAN systems and configurations; balanced to ground for splitter schematics for two, three, four and five output terminals respectively.

Figure 2a shows an example of a simple star like configuration where a CAN1, CAN2, and CAN 3 communicate (e.g. to send/receive data/signals to and from each other). Each of the lines 12a (CAN_H) and 12b (CAN_L) in the line pair from CAN 1 is connected to each of one of the pair of line pairs 11a, 11b in respect of CAN 2 and CAN3. There are therefore two junction points A and B. Thus the signal/line(s) from CAN1 are effectively split. The impedance (IN/OUT) seen by all the CAN systems is 120Ω in the example; i.e. the value of impedance (Zin/Zout) seen by CAN1 CAN 2 and CAN3 is 120Ω. In the example, to provide effective impedances as seen by the CANs of 120Ω each, resistors Ro are added to each line (branch), so between each junction point and CAN. In the example the value of the resistors is 20Ω to provide the overall 120Ω seen by the CANs.

Figure 2b 2c and 2d shows similar examples of a single star configuration for three, four and five CANs. Here the (Hi Lo) the lines from CAN A are split into corresponding lines for each of the other CANs. In these cases, the resistance values of Ro are selected appropriately to provide a seen IN/OUT resistance/impedance of 120Ω. The reference numerals refer to like components in figure 2a.

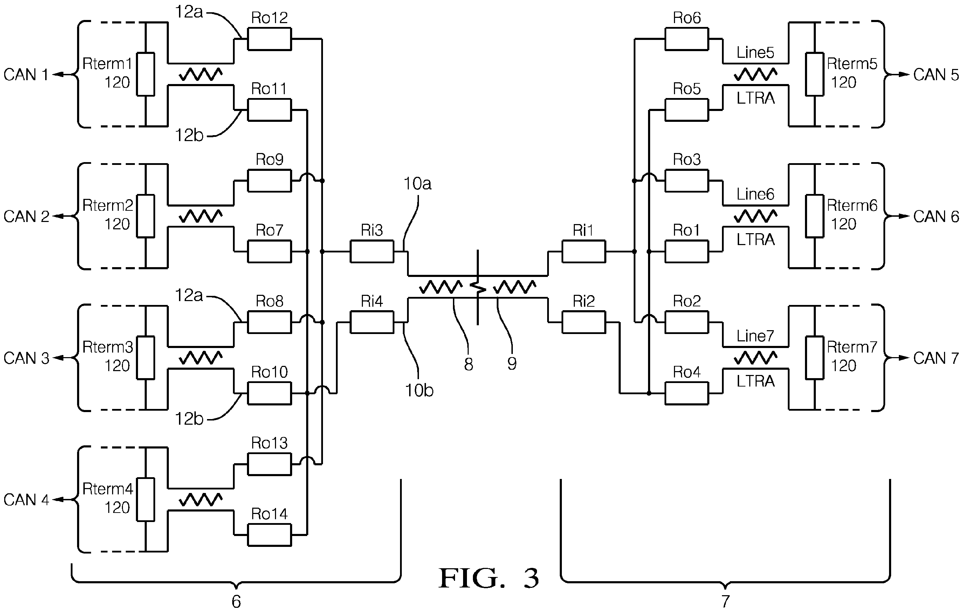

Figure 3 shows a typical "double star" topology CAN system for automotive use constructed with such splitter as described above. Star 6 is comprised of cans CAN1 CAN 2 CAN3 CAN4 and the other star 7 comprises CAN 5, CAN 6 CAN 7. The CANs themselves are not shown for clarity. Each of the lines of the lines pair (in respect to the Hi line 12a and Lo line12b) from each CAN in star 6 is connected, via balancing resistor, to a junction point so as they are connected respectively to the respective one of a pair of common lines (10a, 10b) of an e.g. twisted pair 8 connects a corresponding (e.g. twisted) pair of lines 9 from star 7. Between each CAN and the junction point a balancing resistor (Ro7- Ro14) is provided. Further between each junction point (from which one of each line form the CANs is connected to) and the respective Hi and Lo lines 10a and 10b is included balancing resistors. Star 5 is connected to star 6 by e.g. a twisted cable as mentioned. Star 7 has a similar (mirror image) configuration).

The different line lengths are not critical provided that the overall damping factor will not become excessive (LTRA meaning "Lossy Transmission Line", i.e. twisted pair cable connection). There may be resistors located in parallel between each Hi and Lo lines at the CAN terminals Shown here as Rterm1 - Rterm7)

Simulating this topology by LT Spice or System Vision with CAN signals delivers excellent signal integrity without any ringing or reflections on all ports even with different line lengths as was expected because of meticulously respecting the characteristic wave impedance in any single point of the network structure. But a clear disadvantage is the heavy and unacceptable signal attenuation especially between the "far-out ports" of the network. A solution to this effective problem of excessive damping was to raise the signal level of the transmitting branch by adequate means; however this can cause considerable distortion.

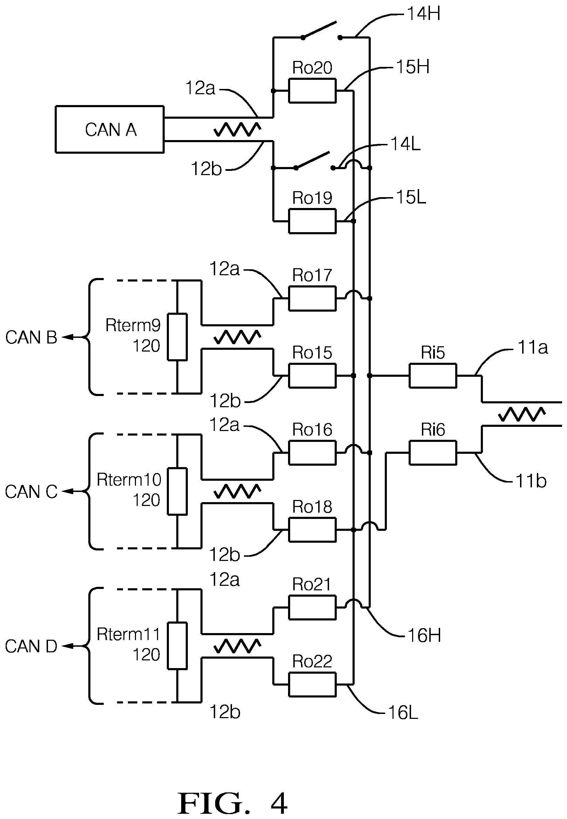

Figure 4 shows one example of the current invention. The figure shows a single star CAN configuration. This can be connected to further CAN devices or a further star like systems to form a double star via twisted pair 11a,11b. where 11 a is the Hi line and 11b is the Lo line.

On the left hand side of the figure are shown connections to four CAN device, CAN A, CAN B, CAN C and CAN D. Only CAN A is shown for the purposes of illustrating the invention. As is similar to figure 3, each of these CANs has a line pair (12a 12 b) with respective to Hi and Lo lines, which may be in the form of twisted cable pair. So these pairs comprise a Hi and Lo line (CAN H and CAN_L). For all the CANs, one of each pair of these lines is connected to a respective common line/junction 16. In the figure the common line/junction line for each of the high side lines is designated 16H and for the low side lines the common line/junction is designated 16L. As can be seen for CAN A, each of the lines CAN_H and CAN_L is connected to the common junction/common line (16H and 16L respectively) via a balancing resistor 15 and a switch 14 (arranged in parallel). In the figure the resistor and switch in respect of the CAN H lines is designated 15H and 14H respectively and for the low side line CAN L designated 15L and 14L respectively.

Each one of the common junction/line (points) 16H, 16L are connected to the respective one of the twisted pair (11a,11b) respectively via balancing resistors Ri5 and Ri6.

So all the CANs are connected to common lines/junctions via balancing resistors Ro15 to Ro22. It is to be noted that Ro20 also the designation as 15H and Ro19 the designation 15L.

It is to be noted that although not shown any or all of CANs of CAN B, CAN C, CAN D, may include an arrangement as for CAN A, i.e. the resistors Ro20, Ro19, Ro 18, Ro17, Ro16, Ro15 Ro21 Ro22 may also include bypass switches, so as to provide bypass of the signal from these resistors for each of the high and low lines (CAN_H and CAN_L) from each CAN respectively.

In operation, when CAN A is transmitting, the switch 14 H and 14L are closed to provide a bypass signal path i.e. by-passing the resistors 15 H and 15L. This allows signals to be transmitted with reduced attenuation.

It is to be noted that in examples the switch may be self-operating (automatic)in respect that the switch closes when it detects that a signal is being transmitted from the CAN A. In these examples there is an exploitable voltage shift between CAN L and CAN H when changing from recessive to dominant state, this can be used to trigger the switch.

The bypass switches and methodology solve the problem of the aforementioned amplitude problem; by allowing the series resistances of the splitter network to be by-passed in the dominant line condition when that corresponding branch is in transmitting state. This prevents excessive attenuation of the n-port line splitter

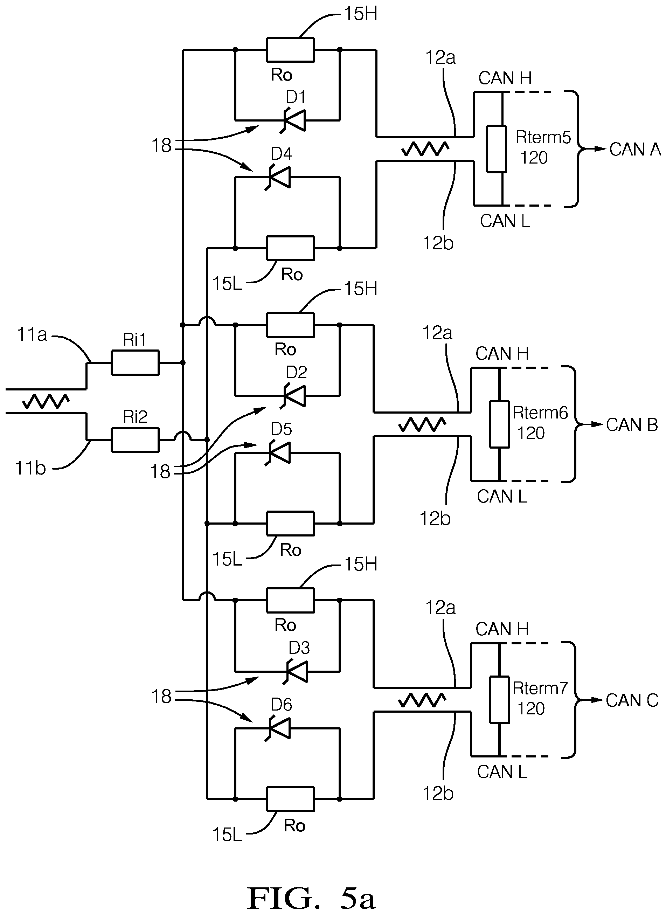

Figure 5a to c shows embodiments of the invention showing how the switching function can be provided.

Figure 5a shows a system of threes CAN devices, CAN A, CAN B and CAN C forming a single star configuration. The network is shown and the CAN devices themselves are not shown for clarity. The figure is similar to figure 4 except a "mirror image". As before each line of the line pair with respect to Hi and Lo lines (12a , 12b) from each CAN is connected to a respective common line/junction, which is connected, via balancing resistors Ri1 and Ri2, to a respective (e.g. twisted) line pair lines in respect of Hi and Lo lines (11a, 11b), over which signals can be transmitted to communicate to or from a CAN device or a similar star system; i.e. over a single twisted pair..

As is similar to figure 4 between each of the common line/junction (16H and 16L) and each of respective CAN H and CAN L lines (12a and 12b), is located a balancing resistor (for CAN A these have respectively references Ro6 and Ro5) and switch means, which in this example is a Schottky diode 18. So the effective switches are provided by Schottky diode in parallel with resistors . Thus, considering the switches 14H and 14L in figure 4 these may comprise Schottky diodes.

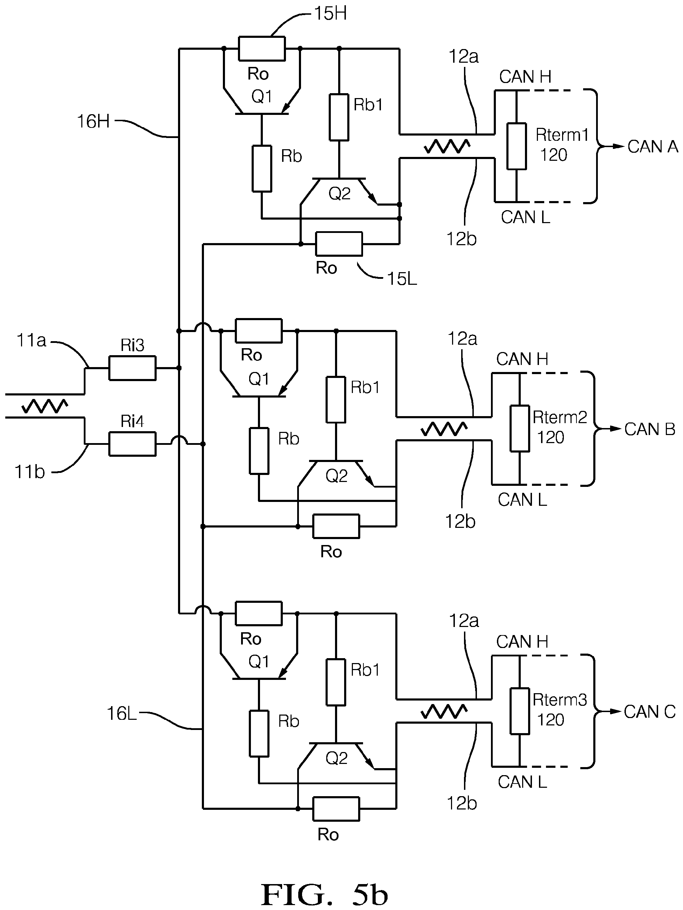

Figure 5b shows a figure similar to figure 5a. It shows the configuration in respect of a number of connected CANs in a single star structure. The figure has corresponding reference numerals to components in figure 4.

The switches comprise of a pair of (bi-polar)transistor) and associated resistors configured arranged as shown. For each CAN with respect to Hi and Lo lines there are provided balancing resistors 15H and 15L between the common line/junctions and the CANs. For each CAN the switch comprises a first (PNP) bipolar transistor Q1, the emitter and collector of which are connected to either side of balancing resistors 15H. The base of this transistor is connected to a point on the low side line 12b, via resistor Rb at a point between the CAN A and resistor 15L. A second (NPN) transistor Q2 is connected as shown where the collector and emitter are connected to point on either side of resistor 15L, and the base is connected via additional resistor Rb1 to a point hi side line 12a, to a point between the resistor 15H and CAN A. For the purpose of completeness the emitter of Q2 is connected to the CAN A side of resistor 15L and collector to the other side of the resistor 15L; the emitter of Q1 is connected to the CAN A side of resistor 15H and collector to the other side of the resistor 15H.

Transmission from the CAN A effectively activates the transistor (switches) such that signals can pass through them between CAN A and other CANs in the system, by passing resistors 15H and 15L.

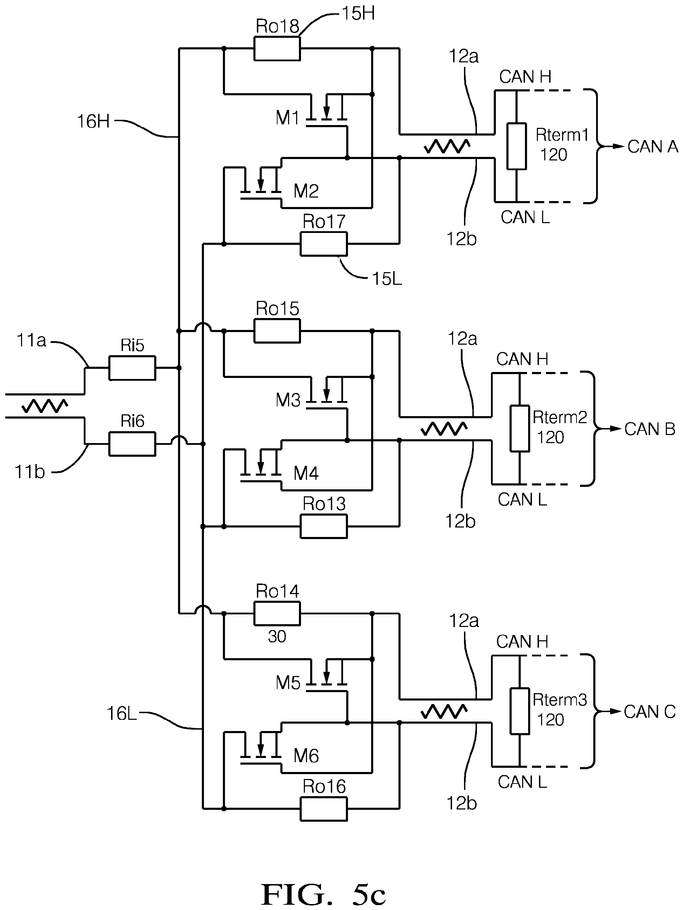

Figure 5c shows a figure similar to figure 5b and 5a. The figure has corresponding reference numerals to identical components. The switches comprise of two MOSFETs M1 and M2 configured as shown. For each CAN with respect to Hi and Lo lines (12a and 12b respectively) there are provided balancing resistors 15H and 15L between the respective common line/junctions 16H and 16L, and the CANs. For each CAN, the switch comprises a first (P channel) MOSFET, M1, the source and drain of which are connected to either side of balancing resistor 15H. The gate of MOSFET M1 is connected to a point on the low side line 12b, at a point between CAN A and resistor 15L. A second (N channel) MOSFET M2, is connected as shown where the source and drain are connected to point on either side of resistor 15L, and the gate is connected to a point on the high side line 12a, to a point between the resistor 15H and CAN A. For the purpose of completeness the source of M1 is connected to the CAN A side of resistor 15L and drain to the other side of the resistor 15L; the source of M2 is connected to the CAN A side of resistor 15H and drain to the other side of the resistor 15H.

Good results with very high attenuation values of the resistive networks are achieved by MOSFETs providing a low "switch on" resistance compared to the forward voltage of the diode and the saturation voltage of the bipolar transistor.

Maximum robustness and cost effectivity can be achieved of course with the implementation of suitable Schottky diodes.

Extensive simulations with LT-Spice were performed on a typical automotive "double star" configuration with realistic cable lengths. Excellent results were obtained with respect to pulse forming and amplitude values on all receiving ports. Bus arbitration was simulated with three CAN transceivers competing for bus access at the same time. There was no signal conflict at the active elements due to the inherent dominant/recessive line philosophy. The peak power losses at the switching elements during bus arbitration procedure have been under research and were found to be far below their limits. Examples of the invention provide an implementation of a symmetrical, resistive n-port line splitter with correct characteristic wave impedance on all ports and countermeasures against excessive attenuation of the n-port line splitter to allow implementation of star-like or double star-like topologies

## Claims

1. A Controller Area Network, CAN, arrangement (1) comprising: a CAN, said CAN having a pair of communication lines (12a, 12b), each line adapted for connection with one or more further CANs via the respective line of a common connection line pair (16H, 16L), and including a first and a second balancing resistor (Ro19-Ro22) located between each of the lines of said pair of communication lines (12a, 12b) and said common connection line pair (16H, 16L), said CAN arrangement being further **characterized by**: including switch means (14L, 14H) located in parallel with said first and second balancing resistor, said switch means being adapted to provide a by-pass path of signals away from said resistor.

2. An arrangement as claimed in claim 1 wherein said switch means is adapted to provide a bypass path for signals when the corresponding CAN is active or in transmitting mode.

3. A CAN arrangement as claimed in claims 1 or 2 wherein said switches comprise Schottky diodes (18).

4. A CAN arrangement as claimed in claims 1 or 2 wherein said switches comprises a pair of transistors located in parallel and each connected to each line of said pair of communication lines (12a, 12b).

5. A CAN arrangement as claimed in claim 4 wherein said transistors are bipolar transistors (Q1,Q2) or MOSFETs (M1-M6).

6. A CAN arrangement as claimed in claim 4 or 5 wherein said transistors are bipolar transistors and where the collector and emitter terminals of the first transistor are connected to either side of the first balancing resistor located on the first of said pair of communication line (12a, 12b) and the collector and emitter terminals of second transistor are connected to either side of the balancing resistor located on the second of said pair of communication lines.

7. A CAN arrangement as claimed in claim 4 or 5 wherein said transistors are MOSFETs (M1-M6) and where the source and drain terminals of the first MOSFET are connected to either side of a first balancing resistor and the source and drain of said second MOSFET are connected to either side of a second balancing resistor.

8. A single star CAN configuration comprising at least one of a CAN, said CAN having a pair of communication lines (12a, 12b), each line adapted for connection with one or more further CANs via the respective line of a common connection line pair (16H, 16L), and including a first and a second balancing resistor (Ro19-Ro22) located between each of the lines of said pair of communication lines (12a, 12b) and said common connection line pair (16H, 16L), furthermore comprising at least one of a CAN arrangement as claimed in claim 1 to 7, wherein the at least one of said CAN and the at least one of a CAN arrangement are connected to a pair of common connection lines (16H/L).

9. A CAN system comprising at least two single star CAN configurations as claimed in claim 8 connected via a single line pair (11a, 11b) so as to form a multiple star arrangement.

## Patentansprüche

1. Eine CAN(Controller Area Network)-Anordnung (1), die aufweist: ein CAN, wobei das CAN ein Paar von Kommunikationsleitungen (12a, 12b) hat, wobei jede Leitung ausgebildet ist zur Verbindung mit einem oder mehreren weiteren CANs über die jeweilige Leitung eines gemeinsamen Verbindungsleitungspaares (16H, 16L), und einen ersten und einen zweiten Ausgleichswiderstand (Ro19 - Ro22) umfassend, die sich zwischen jeder der Leitungen des Paares von Kommunikationsleitungen (12a, 12b) und dem gemeinsamen Verbindungsleitungspaar (16H, 16L) befinden, wobei die CAN-Anordnung weiter **gekennzeichnet ist durch**: ein Schaltmittel (14L, 14H) umfassend, das parallel zu dem ersten und zweiten Ausgleichswiderstand angeordnet ist, wobei das Schaltmittel ausgebildet ist zum Vorsehen eines Umgehungspfads von Signalen weg von dem Widerstand.

2. Eine Anordnung gemäß Anspruch 1, wobei das Schaltmittel ausgebildet ist zum Vorsehen eines Umgehungspfads für Signale, wenn das entsprechende CAN aktiv oder in einem Sendemodus ist.

3. Eine CAN-Anordnung gemäß Anspruch 1 oder 2, wobei die Schalter Schottky-Dioden (18) aufweisen.

4. Eine CAN-Anordnung gemäß Anspruch 1 oder 2, wobei die Schalter ein Paar von Transistoren aufweisen, die parallel angeordnet sind und jeweils mit jeder Leitung des Paares von Kommunikationsleitungen (12a, 12b) verbunden sind.

5. Eine CAN-Anordnung gemäß Anspruch 4, wobei die Transistoren Bipolartransistoren (Q1, Q2) oder MOSFETs (M1-M6) sind.

6. Eine CAN-Anordnung gemäß Anspruch 4 oder 5, wobei die Transistoren Bipolartransistoren sind und wobei die Kollektor- und Emitter-Anschlüsse des ersten Transistors mit einer Seite des ersten Ausgleichswiderstands verbunden sind, der sich an der ersten des Paares von Kommunikationsleitungen (12a, 12b) befindet, und die Kollektor- und Emitter-Anschlüsse des zweiten Transistors mit einer Seite des Ausgleichswiderstands verbunden sind, der sich an der zweiten des Paares von Kommunikationsleitungen befindet.

7. Eine CAN-Anordnung gemäß Anspruch 4 oder 5, wobei die Transistoren MOSFETs (M1 - M6) sind und wobei die Source- und Drain-Anschlüsse des ersten MOSFETs mit einer Seite eines ersten Ausgleichswiderstands verbunden sind und Source und Drain des zweiten MOSFETs mit einer Seite eines zweiten Ausgleichswiderstands verbunden sind.

8. Eine Einzelstern-CAN-Konfiguration, die zumindest eines eines CANs aufweist, wobei das CAN ein Paar von Kommunikationsleitungen (12a, 12b) hat, wobei jede Leitung ausgebildet ist zur Verbindung mit einem oder mehreren weiteren CANs über die jeweilige Leitung eines gemeinsamen Verbindungsleitungspaares (16H, 16L), und einen ersten und einen zweiten Ausgleichswiderstand (Ro19 - Ro22) umfassend, die sich zwischen jeder der Leitungen des Paares von Kommunikationsleitungen (12a, 12b) und dem gemeinsamen Verbindungsleitungspaar (16H, 16L) befinden, weiter zumindest eines einer CAN-Anordnung gemäß Anspruch 1 bis 7 aufweisend, wobei das zumindest eine des CANs und die zumindest eine einer CAN-Anordnung mit einem Paar von gemeinsamen Verbindungsleitungen (16H/L) verbunden sind.

9. Ein CAN-System, das zumindest zwei Einzelstern-CAN-Konfigurationen gemäß Anspruch 8 aufweist, die über ein einzelnes Leitungspaar (11a, 11b) verbunden sind, um eine Anordnung mit mehreren Sternen zu bilden.

## Revendications

1. Agencement de réseau de multiplexage, CAN, (1) comprenant : un CAN, ledit CAN présentant une paire de lignes de communication (12a, 12b), chaque ligne étant adaptée pour être connectée à un ou plusieurs autres CAN par l'intermédiaire de la ligne respective d'une paire de lignes de connexion communes (16H, 16L), et comportant une première et une seconde résistance d'équilibrage (Ro19-Ro22) située entre chacune des lignes de ladite paire de lignes de communication (12a, 12b) et ladite paire de lignes de connexion communes (16H, 16L), ledit agencement CAN étant **caractérisé en outre par** : l'inclusion d'un moyen de commutation (14L, 14H) situé en parallèle avec lesdites première et seconde résistances d'équilibrage, ledit moyen de communication étant adapté pour fournir un chemin de dérivation des signaux à l'écart de ladite résistance.

2. Agencement selon la revendication 1 dans lequel ledit moyen de commutation est adapté pour fournir un chemin de dérivation des signaux quand le CAN correspondant est actif ou dans un mode de transmission.

3. Agencement CAN selon les revendications 1 ou 2 dans lequel lesdits commutateurs comprennent des diodes Schottky (18) .

4. Agencement CAN selon les revendications 1 ou 2 dans lequel lesdits commutateurs comprennent une paire de transistors situés en parallèle et connectés chacun à chaque ligne de ladite paire de lignes de communication (12a, 12b).

5. Agencement CAN selon la revendication 4 dans lequel lesdits transistors sont des transistors bipolaires (Q1,Q2) ou MOSFET (M1-M6).

6. Agencement CAN selon la revendication 4 ou 5 dans lequel lesdits transistors sont des transistors bipolaires et les bornes de collecteur et d'émetteur du premier transistor sont connectées à l'un ou l'autre côté de la première résistance d'équilibrage située sur la première de ladite paire de lignes de communication (12a, 12b) et les bornes de collecteur et d'émetteur du second transistor sont connectées à l'un ou l'autre côté de la résistance d'équilibrage située sur la seconde de ladite paire de lignes de communication.

7. Agencement CAN selon la revendication 4 ou 5 dans lequel lesdits transistors sont des MOSFET (M1-M6) et les bornes de source et de drain du premier MOSFET sont connectées à l'un ou l'autre côté d'une première résistance d'équilibrage et la source et le drain dudit second MOSFET sont connectés à l'un ou l'autre côté d'une seconde résistance d'équilibrage.

8. Configuration CAN en étoile unique comprenant au moins un d'un CAN, ledit CAN présentant une paire de lignes de communication (12a, 12b), chaque ligne étant adaptée pour être connectée à un ou plusieurs autres CAN par l'intermédiaire de la ligne respective d'une paire de lignes de connexion communes (16H, 16L), et comportant une première et une seconde résistance d'équilibrage (Ro19-Ro22) situées entre chacune des lignes de ladite paire de lignes de communication (12a, 12b) et ladite paire de lignes de connexion communes (16H, 16L), comprenant en outre au moins un d'un agencement CAN selon la revendication 1 à 7, dans lequel l'au moins un dudit CAN et l'au moins un d'un agencement CAN sont connectés à une paire de lignes de connexion communes (16H/L).

9. Système CAN comprenant au moins deux configurations CAN en étoile unique selon la revendication 8 connectées par l'intermédiaire d'une même paire de lignes (11a, 11b) de manière à former un agencement d'étoiles multiples.
